# FASCICULE DE BREVET EUROPEEN

(11) **EP 1 564 136 B1**
(45) Date de publication et mention de la délivrance du brevet: **28.03.2007**
(21) Numéro de dépôt: 05101021.3
(22) Date de dépôt: 11.02.2005
(51) Int. Cl.: B64C 25/16

(54) **Trappe articulée pour train d'atterrissage d'aéronef**
Falttür für Flugzeugfahrwerk
Articulated Landing Gear Door

(30) Priorité: 13.02.2004 FR 0450261
(43) Date de publication de la demande: 17.08.2005
(73) Titulaire: AIRBUS France, 31060 Toulouse (FR)
(72) Inventeur: ROUYRE, François, 31700, CORNEBARRIEU (FR)
(74) Mandataire: Poulin, Gérard

(56) Documents cités:
- EP-A- 1 129 938
- WO-A-01/56878
- US-A- 2 731 221

## Description

### Domaine technique

L'invention concerne une trappe de train d'atterrissage d'aéronef.

La trappe selon l'invention peut être utilisée pour fermer une case de train servant à loger un train d'atterrissage sur tout type d'aéronef, notamment lorsque le train d'atterrissage est placé sous le fuselage de celui-ci.

### Etat de la technique

Une trappe de train d'atterrissage est formée habituellement d'un panneau rigide monobloc, articulé sur la structure de l'aéronef par un axe de pivotement décalé vers l'intérieur de la case de train par rapport audit panneau. Un vérin est interposé entre le panneau et la structure, à l'intérieur de la case de train, pour commander le pivotement du panneau vers l'extérieur du fuselage lors de la sortie du train d'atterrissage.

L'agencement de l'axe de pivotement à l'intérieur de la case de train est dû au fait qu'il n'est pas possible, dans la pratique, de placer des charnières directement sur le fuselage, notamment pour préserver la continuité aérodynamique de celui-ci.

Pour des raisons de sécurité, liées aux risques d'éclatement des pneumatiques, il est souhaitable qu'une trappe de train d'atterrissage puisse être ouverte et fermée sans entrer en contact avec les roues, lorsque le train est sorti.

Les trappes existantes à panneau monobloc pivotant ne permettent pas de résoudre ce problème. En effet, l'extrémité du panneau interfère avec les roues pendant ses mouvements d'ouverture et de fermeture, lorsque le train d'atterrissage est sorti.

Le document WO-A-01 56878 décrit une trappe de train d'atterrissage conforme au préambule de la revendication 1.

### Exposé de l'invention

L'invention a principalement pour objet une trappe pour train d'atterrissage d'aéronef, dont la conception originale lui permet de ne pas entrer en contact avec les roues pendant ses mouvements d'ouverture et de fermeture, lorsque le train est sorti.

Conformément à l'invention, cet objectif est atteint au moyen d'une trappe de train d'atterrissage d'aéronef telle que définie dans la revendication 1.

Cet agencement permet de réduire progressivement et de manière contrôlée l'encombrement du panneau, notamment dans une direction verticale, au fur et à mesure de son ouverture, et inversement. On peut ainsi éviter que ledit panneau vienne toucher une roue du train d'atterrissage lorsque celui-ci est déjà sorti. Cet agencement permet aussi à la trappe de s'ouvrir par gravité, pour permettre une sortie du train lorsque les moyens de commande sont inopérants. Dans ce cas, il n'est pas demandé à la trappe de se refermer.

Dans un mode de réalisation préféré de l'invention, les moyens de contrôle cinématique comprennent deux biellettes articulées chacune sur l'une des parties rigides par une de leurs extrémités et une bielle principale articulée entre les autres extrémités des biellettes et la structure de l'aéronef.

Cet agencement permet d'obtenir une ouverture automatique de la trappe par gravité, lors d'une défaillance des moyens de commande, en plaçant la plaque d'appui sous une roue du train d'atterrissage et en donnant à la force prédéterminée une valeur au plus égale à la masse du train lorsque l'aéronef est proche du sol.

Dans ce perfectionnement, la plaque d'appui est avantageusement reliée, par au moins une bielle auxiliaire, aux extrémités des biellettes articulées sur la bielle principale.

### Brève description des dessins

On décrira à présent, à titre d'exemples illustratifs et nullement limitatifs, différents modes de réalisation de l'invention, en se référant aux dessins annexés, dans lesquels :
- les figures 1A et 1B sont des vues en coupe schématique illustrant une trappe de train d'atterrissage selon l'état de la technique, respectivement en position fermée et en position ouverte ;
- les figures 2A et 2B sont des vues en coupe schématique illustrant une trappe de train d'atterrissage selon un mode de réalisation de l'invention, respectivement en position fermée et en position ouverte ; et
- la figure 3 est une vue en coupe représentant plus en détail la trappe des figures 2A et 2B, en position ouverte.

### Description détaillée d'un mode de réalisation préféré de l'invention

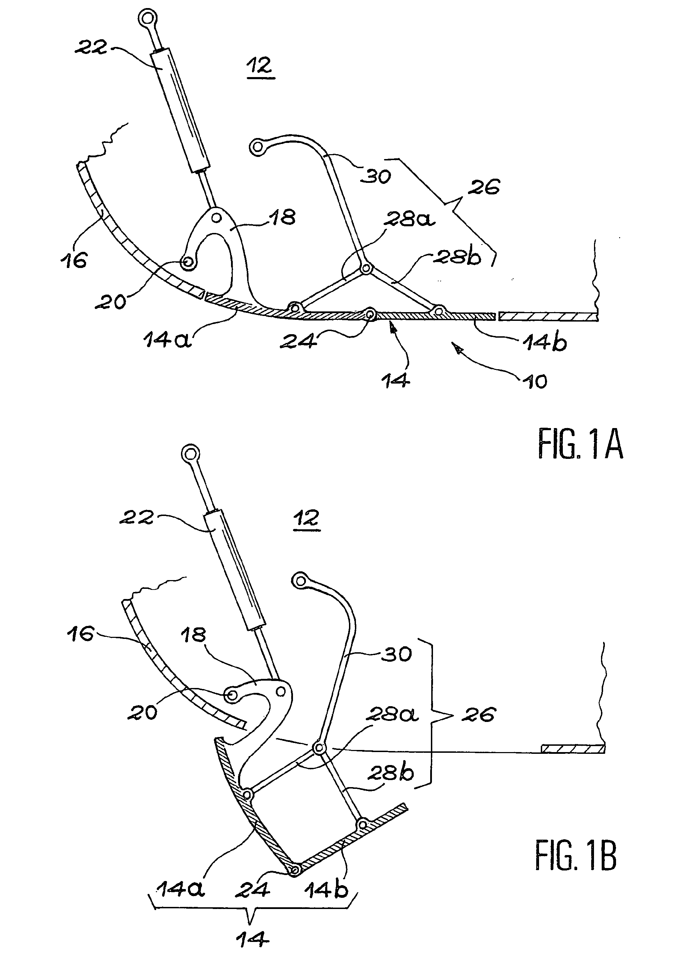

Comme l'illustrent très schématiquement les figures 1A et 1B, l'invention concerne une trappe 10 de train d'atterrissage d'aéronef. Une telle trappe 10 est destinée à fermer une case de train 12 dans laquelle est logé le train d'atterrissage, lorsque celui-ci est rentré.

La trappe 10 comprend un panneau 14 dont la forme est complémentaire de celle d'une ouverture formée dans la partie 16 de l'enveloppe extérieure de l'aéronef dans laquelle est implanté le train d'atterrissage associé à ladite trappe. Cette partie 16 de l'enveloppe extérieure de l'aéronef est généralement un élément de fuselage ou de voilure.

Le panneau 14 est supporté par la structure de l'aéronef, à l'intérieur de la case de train 12, par l'intermédiaire de bras rigides 18 solidaires du panneau 14 et aptes à pivoter sur ladite structure par un axe de pivotement 20. Cet axe de pivotement est généralement orienté selon une direction sensiblement parallèle à l'axe longitudinal de l'aéronef et situé du côté extérieur de la trappe par rapport audit axe longitudinal.

Des moyens de commande de pivotement, généralement matérialisés par un vérin 22, sont interposés entre le panneau 14 et la structure de l'aéronef, à l'intérieur de la case de train 12. Plus précisément, les extrémités du vérin sont reliées respectivement aux bras rigides 18 et à ladite structure par des pivots.

Cet agencement permet à la trappe de passer d'un état fermé, illustré sur la figure 1A, dans un état ouvert, illustré sur la figure 1B, lors d'un actionnement des moyens de commande.

Lorsque la trappe 10 est dans son état fermé, elle assure la continuité aérodynamique de l'enveloppe extérieure de l'aéronef dans la zone concernée.

Conformément à l'invention, le panneau 14 est formé de deux parties rigides 14a et 14b, articulées entre elles bord à bord, selon un axe d'articulation 24. Cet axe d'articulation 24 est orienté selon une direction sensiblement parallèle à l'axe de pivotement 20.

Les bras 18 sont solidaires de la première partie 14a du panneau 14, de telle sorte que cette première partie 14a pivote directement autour de l'axe de pivotement 20 lorsque les moyens de commande sont actionnés. L'axe d'articulation 24 relie la deuxième partie 14b du panneau 14 au bord de la première partie 14a le plus éloigné de l'axe de pivotement 20.

En outre, la trappe 10 comprend des moyens 26 de contrôle cinématique, destinés à contrôler la cinématique de la deuxième partie 14b du panneau 14 lors de la mise en oeuvre des moyens de commande. Plus précisément, les moyens 26 de contrôle cinématique sont conçus pour assurer un repliement progressif contrôlé des parties rigides 14a et 14b autour de l'axe d'articulation 24, lorsque les moyens de commande sont actionnés dans le sens de l'ouverture de la trappe, et inversement. Cette action des moyens 26 de contrôle cinématique apparaît clairement en comparant les figures 1A et 1B.

Dans la pratique, les moyens 26 de contrôle cinématique sont constitués par un mécanisme qui relie chacune des parties rigides 14a et 14b entre elles ainsi qu'à la structure de l'aéronef, à l'intérieur de la case de train 12.

Sur les figures 1A et 1B, ce mécanisme comprend au moins deux biellettes 28a et 28b et au moins une bielle principale 30. Une extrémité de la biellette 28a est articulée sur la première partie 14a du panneau 14, une extrémité de la biellette 28b est articulée sur la deuxième partie 14b du panneau 14 et une extrémité de la bielle principale 30 est articulée sur la structure de l'aéronef. Enfin, les extrémités opposées des biellettes 28a et 28b et de la bielle principale 30 sont articulées entre elles.

Sur les figures 1A et 1B, les deux parties 14a et 14b du panneau 14 sont sensiblement de même largeur. Leur largeur peut toutefois être différente, sans sortir du cadre de l'invention.

On notera également que le panneau 14 peut être formé de plus de deux parties rigides articulées entre elles, sans sortir du cadre de l'invention. Dans ce cas, les moyens 26 de contrôle cinématique sont modifiés de façon à assurer un repliement progressif contrôlé de chacune des parties du panneau.

Lorsque la trappe 10 est fermée comme l'illustre la figure 1A, les différentes parties 14a, 14b du panneau 14 sont alignées entre elles ainsi qu'avec la partie adjacente 16 de l'enveloppe extérieure de l'aéronef.

Lorsqu'on actionne le vérin 22 dans le sens de l'ouverture de la trappe 10, on provoque le pivotement vers l'extérieur de l'aéronef de la première partie 14a du panneau 14, autour de l'axe de pivotement 20.

Simultanément, les moyens 26 de contrôle cinématique tirent la deuxième partie 14b de la trappe 14 vers l'intérieur de l'aéronef, du fait que la bielle principale 30 est articulée directement sur la structure de l'aéronef et qu'elle est de longueur invariable, de même que les biellettes 28a et 28b. Par conséquent, la deuxième partie 14b du panneau 14 se replie progressivement et de manière contrôlée vers l'intérieur de la case de train 12, en tournant autour de l'axe d'articulation 24. Ce repliement est illustré sur la figure 1B.

Du fait de l'agencement qui vient d'être décrit, l'espace nécessaire au débattement de la trappe 10 est plus petit que dans le cas d'une trappe monobloc de l'art antérieur. En particulier, l'encombrement de la trappe dans le sens vertical est sensiblement réduit de moitié lorsque la trappe est ouverte, dans le cas où les deux parties 14a et 14b ont la même largeur.

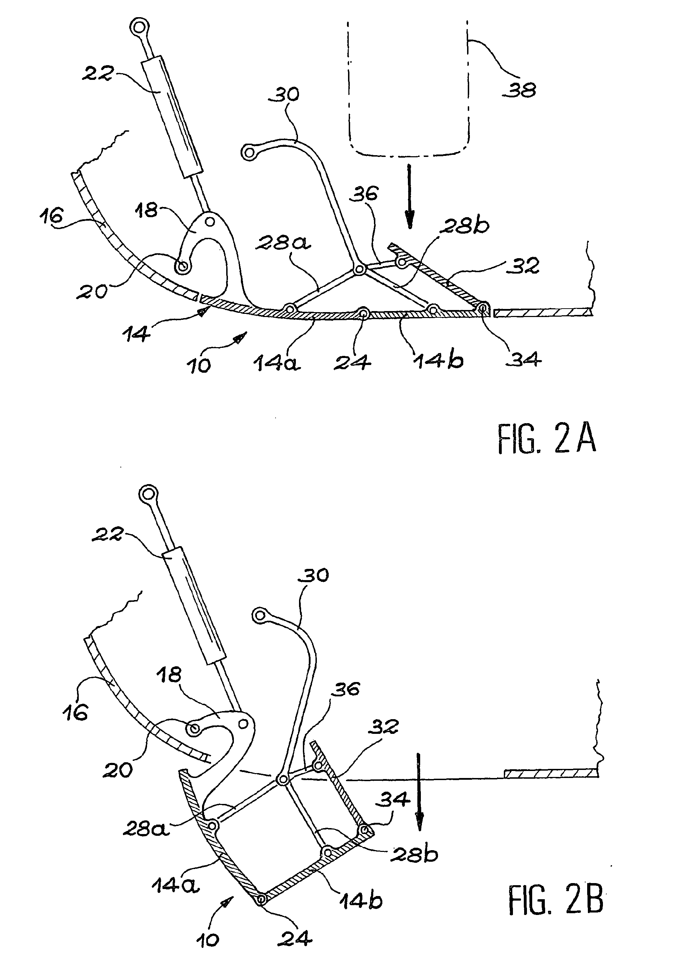

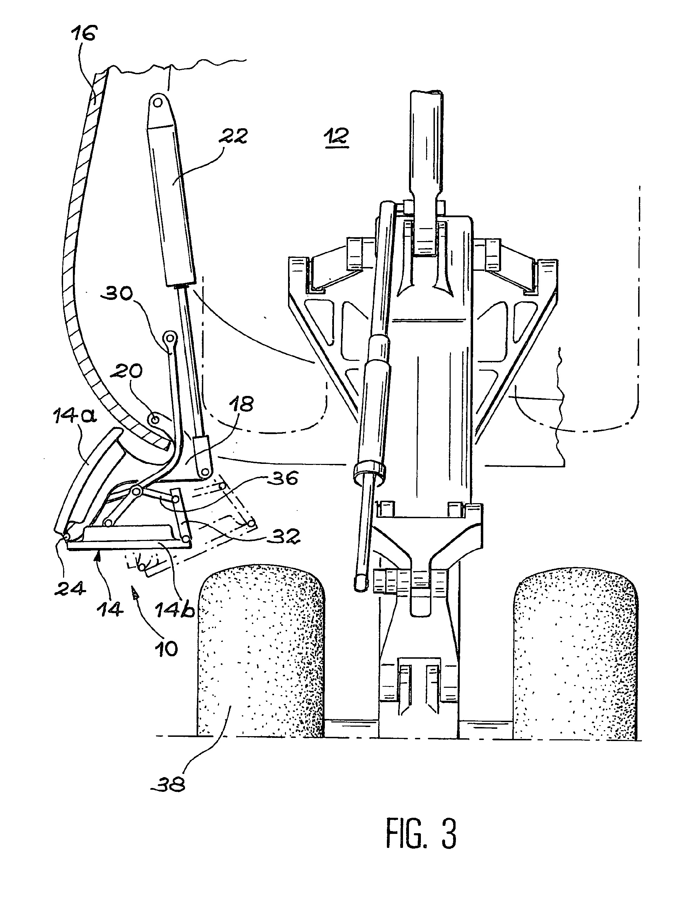

Les figure 2A, 2B et 3 illustrent un mode de réalisation de l'invention. Ce mode de réalisation reprend tous les éléments des figures 1A et 1B à l'identique. Dans un but de simplification, seuls les éléments propres à l'invention vont à présent être exposés.

Une plaque d'appui rigide 32 est articulée par un axe 34 à l'intérieur de la deuxième partie 14b du panneau 14. Plus précisément, l'axe 34 relie un bord de la plaque d'appui 32 à la deuxième partie 14b à proximité du bord de celle-ci opposé à l'axe d'articulation 24.

Le bord de la plaque d'appui 32 opposé à l'axe 34 est relié aux moyens 26 de contrôle cinématique par au moins une bielle auxiliaire 36. Plus précisément, une extrémité de la bielle auxiliaire 36 est articulée aux extrémités par lesquelles la bielle principale 30 et les biellettes 28a et 28b sont articulées entre elles.

Comme l'illustre la figure 2A, l'agencement qui vient d'être décrit est tel que, lorsque la trappe 10 est fermée, la plaque d'appui 32 est placée au-dessus de la deuxième partie 14b du panneau 14 et inclinée vers le bas en allant vers l'axe 34. Plus précisément, l'angle d'inclinaison de la plaque d'appui 32 par rapport à l'horizontale est alors compris entre environ 30° et environ 45°.

En outre et comme on l'a représenté en trait mixte sur la figure 3, la plaque d'appui est alors située en dessous d'une ou plusieurs des roues 38 du train d'atterrissage.

Dans ces conditions, si le vérin de commande 22 est inopérant alors que le train d'atterrissage doit être sorti, la masse présentée par le train lorsque l'aéronef est proche du sol exerce sur la plaque d'appui 32 une force orientée vers le bas, suffisante pour provoquer l'ouverture automatique de la trappe, comme l'illustrent les figures 2B et 3. En effet, l'agencement représenté sur ces figures est tel que la trappe s'ouvre automatiquement lorsqu'une force prédéterminée, au plus égale à la masse précitée, est exercée de haut en bas sur la plaque d'appui 32.

Ainsi, l'invention illustrée sur les figures 2A, 2B et 3 permet de garantir une ouverture automatique de la trappe 10 et donc une sortie automatique du train d'atterrissage par gravité, lorsque les moyens de commande de ladite trappe sont défaillants.

## Revendications

1. Trappe de train d'atterrissage d'aéronef, montée dans une structure d'aéronef formant une case de train dans laquelle est installé un train d'atterrissage comportant au moins une zone, ladite trappe comprenant un panneau (14), apte à pivoter sur la structure de l'aéronef par un axe de pivotement (20), et des moyens (22) de commande de pivotement interposés entre le panneau (14) et la structure, dans laquelle le panneau (14) est formé d'au moins deux parties rigides (14a, 14b), articulées entre elles selon un axe d'articulation (24) sensiblement parallèle à l'axe de pivotement (20), des moyens (26) de contrôle cinématique étant prévus pour assurer un repliement progressif contrôlé des parties rigides (14a, 14b) autour dudit axe d'articulation (24), lors d'une mise en oeuvre des moyens de commande (22) dans un sens d'ouverture de la trappe, et inversement, et dans laquelle les moyens de commande (22) sont interposés entre la structure de l'aéronef et une première (14a) des parties rigides, reliée à ladite structure par l'axe de pivotement (20), **caractérisé en ce qu'**une plaque d'appui (32) est articulée à l'intérieur de la deuxième partie rigide (14b), à proximité d'un bord de celle-ci opposé et parallèle à l'axe d'articulation (24), ladite plaque d'appui (32) étant reliée aux moyens (26) de contrôle cinématique de façon à provoquer une ouverture automatique de la trappe lorsqu'une force prédéterminée est appliquée de haut en bas sur la plaque d'appui.

2. Trappe de train d'atterrissage selon la revendication 1, dans laquelle les moyens (26) de contrôle cinématique comprennent deux biellettes (28a, 28b) articulées chacune sur l'une des parties rigides (14a, 14b) par une de leurs extrémités et une bielle principale (30) articulée entre les autres extrémités des biellettes et la structure de l'aéronef.

3. Trappe de train d'atterrissage selon la revendication 2, dans laquelle la plaque d'appui (32) est reliée aux autres extrémités des biellettes (28a, 28b) par au moins une bielle auxiliaire (36).

4. Trappe de train d'atterrissage selon l'une quelconque des revendications 1 à 3, dans laquelle la plaque d'appui (32) est placée sous ladite roue (38) du train d'atterrissage et ladite force prédéterminée est au plus égale à la masse dudit train lorsque l'aéronef est proche du sol.

## Claims

1. Aircraft landing gear door installed in an aircraft structure forming a landing gear compartment in which is installed a landing gear having at least one wheel, said door comprising a panel (14), capable of pivoting about a pivot pin (20) on an aircraft structure, and means (22) of controlling pivoting, inserted between the panel (14) and the structure in which the panel (14) is formed from at least two rigid parts (14a, 14b) hinged to each other about a hinge pin (24) approximately parallel to the pivot pin (20), kinematic control means (26) being provided to enable progressive and controlled folding of rigid parts (14a, 14b) about the said hinge pin (24), when the control means (22) are actuated to open the door, and conversely in which the control means (22) are inserted between the aircraft structure and a first part (14a) of the rigid parts, connected to the said structure through the pivot pin (20), **characterized in that** a thrust plate (32) is hinged to the inside of the second rigid part (14b), close to one of its edges opposite to and parallel to the hinge pin (24), the said thrust plate (32) being connected to the kinematic control means (26) so as to automatically open the door when a predetermined downwards force is applied to the thrust plate.

2. Aircraft landing gear door according to claim 1, in which the kinematic control means include two door panel rods (28a, 28b) each hinged onto one of the rigid parts (14a, 14b) at one of their ends and a main connecting rod (30) hinged between the other ends of the door panel rods and the aircraft structure.

3. Aircraft landing gear door according to claim 2, in which the thrust plate (32) is connected to the other ends of the door panel rods (28a, 28b) through at least one auxiliary rod (36).

4. Aircraft landing gear door according to any one of claims 1 to 3, in which the thrust plate (32) is located below said wheel (38) of the landing gear and the said predetermined force is equal to not more than the mass of the said landing gear when the aircraft is close to the ground.

## Patentansprüche

1. Falttür eines Fahrwerks eines Luftfahrzeugs, die in einer Luftfahrzeugstruktur angebracht ist, welche ein Fahrwerkgehäuse bildet, in dem ein Fahrwerk installiert ist, das mindestens ein Rad aufweist, wobei die Falttür mindestens eine Platte (14) umfaßt, die sich an der Luftfahrzeugstruktur über eine Dreh-/Schwenkachse (20) drehen kann, sowie Mittel (22) zur Steuerung der Drehung, die zwischen die Platte (14) und die Struktur eingefügt sind, wobei die Platte (14) aus mindestens zwei starren Abschnitten (14a, 14b) gebildet ist, die untereinander entlang einer zu der Dreh-/Schwenkachse (20) im wesentlichen parallelen Gelenkachse (24) gelenkig verbunden sind, wobei Mittel (26) zur Bewegungssteuerung vorgesehen sind, um eine gesteuerte fortschreitende Faltung der starren Abschnitte (14a, 14b) um die Gelenkachse (24) herum bei einer Betätigung der Steuermittel (22) in einer Öffnungsrichtung der Falttür und in umgekehrter Richtung zu ermöglichen, und wobei die Steuermittel (22) zwischen die Luftfahrzeugstruktur und einen ersten (14a) der starren Abschnitte eingefügt sind, der mit der Struktur über die Dreh-/Schwenkachse (20) verbunden ist, **dadurch gekennzeichnet, dass** eine Stützplatte (32) im Innern des zweiten starren Abschnitts (14b) in Nähe eines Randes desselben gegenüber der und parallel zu der Gelenkachse (24) gelenkig angebracht ist, wobei die Stützplatte (32) mit den Mitteln (26) zur Bewegungssteuerung derart verbunden ist, dass ein automatisches Öffnen der Falttür ausgelöst wird, wenn eine vorbestimmte Kraft von oben nach unten auf die Stützplatte aufgebracht wird.

2. Fahrwerk-Falttür nach Anspruch 1, wobei die Mittel (26) zur Bewegungssteuerung zwei Kurbelteile (28a, 28b) umfassen, die jeweils mit einem der starren Abschnitte (14a, 14b) über eines ihrer Enden gelenkig verbunden sind, und eine Hauptkurbel (30), die zwischen den anderen Enden der Kurbelteile und der Luftfahrzeugstruktur angebracht ist.

3. Fahrwerk-Falttür nach Anspruch 2, wobei die Stützplatte (32) mit den anderen Enden der Kurbelteile (28a, 28b) über mindestens eine Hilfskurbel (36) verbunden ist.

4. Fahrwerk-Falttür nach einem der Ansprüche 1 bis 3, wobei die Stützplatte (32) unter dem Rad (38) des Fahrwerks angeordnet ist und die vorbestimmte Kraft höchstens gleich der Masse des Fahrwerks ist, wenn sich das Luftfahrzeug nahe am Boden befindet.
